(19) Europäisches Patentamt
European Patent Office
Office européen des brevets

(11) **EP 1 694 966 B1**

(12) **EUROPÄISCHE PATENTSCHRIFT**

(45) Veröffentlichungstag und Bekanntmachung des Hinweises auf die Patenterteilung:
**09.05.2007 Patentblatt 2007/19**

(51) Int Cl.:
*F04B 49/02* *(2006.01)*    *F04B 49/06* *(2006.01)*
*B60G 17/04* *(2006.01)*    *B60G 17/052* *(2006.01)*

(21) Anmeldenummer: **04791181.3**

(22) Anmeldetag: **08.10.2004**

(86) Internationale Anmeldenummer:
**PCT/EP2004/052479**

(87) Internationale Veröffentlichungsnummer:
**WO 2005/050020 (02.06.2005 Gazette 2005/22)**

(54) **VERFAHREN ZUR STEUERUNG EINES KOMPRESSORS ZUR DRUCKMITTELFÖRDERUNG IN EINER NIVEAUREGELANLAGE EINES KRAFTFAHRZEUGES**

METHOD FOR CONTROLLING A COMPRESSOR FOR TRANSPORTING A PRESSURE MEDIUM IN A LEVEL ADJUSTMENT SYSTEM OF A MOTOR VEHICLE

PROCEDE POUR COMMANDER UN COMPRESSEUR POUR LE TRANSPORT DE FLUIDE DE PRESSION DANS LE SYSTEME DE REGULATION PAR NIVEAU D'UN VEHICULE

(84) Benannte Vertragsstaaten:
**AT BE BG CH CY CZ DE DK EE ES FI FR GB GR HU IE IT LI LU MC NL PL PT RO SE SI SK TR**

(30) Priorität: **21.11.2003 DE 10354491**

(43) Veröffentlichungstag der Anmeldung:
**30.08.2006 Patentblatt 2006/35**

(73) Patentinhaber: **Continental Aktiengesellschaft**
**30165 Hannover (DE)**

(72) Erfinder:
• **FOLCHERT, Uwe**
**31867 Lauenau (DE)**

• **HEIN, Dierk**
**30900 Wedemark (DE)**

(74) Vertreter: **Finger, Karsten et al**
**Continental Aktiengesellschaft**
**Patente und Lizenzen**
**Postfach 169**
**30001 Hannover (DE)**

(56) Entgegenhaltungen:
**EP-A- 1 253 321         DE-A1- 3 919 407**
**DE-A1- 19 913 248     DE-C1- 19 621 946**
**DE-C1- 19 959 556     US-A- 4 462 610**

EP 1 694 966 B1

**Beschreibung**

Die Erfindung betrifft ein Verfahren zur Steuerung eines Kompressors, der zur Druckmittelförderung in einer geschlossenen Druckmittelanlage, vorzugsweise zur Druckmittelförderung in einer geschlossenen Niveauregelanlage eines Kraftfahrzeuges, geeignet ist, bei dem zumindest während des Kompressorlaufes ständig die aktuelle Kompressortemperatur bestimmt wird und der Kompressor spätestens bei Erreichen einer Grenztemperatur abgeschaltet wird.

Ein Kompressor zur Druckmittelförderung wird in einem Kraftfahrzeug z. B. zur Steuerung bzw. Regelung einer Niveauregelanlage eingesetzt. Die Niveauregelanlage verfügt an mindestens einer der Achsen des Kraftfahrzeuges über Luftfedern, mit deren Hilfe unabhängig vom Beladungszustand des Kraftfahrzeuges die Höhe des Fahrzeugaufbaus konstant gehalten werden kann, indem bei einer erhöhten Zuladung die Luftfedern mit Druckluft befüllt werden bzw. bei einer erniedrigten Zuladung Druckluft aus den Luftfedern abgelassen wird. Eine geschlossene Niveauregelanlage verfügt neben den Luftfedern über einen Druckluftspeicher und der Kompressor wird sowohl dazu genutzt, zum Anheben des Fahrzeugaufbaus Druckluft aus dem Druckluftspeicher in die Luftfedern zu überführen, als auch dazu, zum Absenken des Fahrzeugaufbaus Druckluft aus den Luftfedern in den Druckluftspeicher zu überführen. Geschlossene Niveauregelanlagen für Kraftfahrzeuge sind an sich bekannt und z. B. ausführlich in der DE 199 59 556 C1 beschrieben.

An den Kompressor der Niveauregelanlage werden hohe Anforderungen gestellt. So wird zum Beispiel insbesondere gefordert, dass der Fahrzeugaufbau des Kraftfahrzeuges mit Hilfe der Niveauregelanlage stark angehoben werden kann (z. B. von einem Niedrigniveau in ein Hochniveau bei einem normalen PKW oder in ein extremes Hochniveau bei einem Geländewagen). Hierbei kann es zu einer starken Erhitzung und infolgedessen zu einer Beschädigung des Kompressors kommen. Aus diesem Grunde sind bereits verschiedene Temperaturzmodelle zur Überwachung der Kompressortemperatur entwickelt worden, so dass der Kompressor bei Erreichen einer Grenztemperatur (bei der sichergestellt ist, dass der Kompressor noch nicht beschädigt wird) abgeschaltet werden kann. Viele dieser Temperaturmodelle (Temperaturnnodelle werden im Folgenden als Verfahren bezeichnet) zeichnen sich dadurch aus, dass zur Feststellung der Kompressortemperatur auf einen teuren Temperatursensor verzichtet werden kann. Entsprechende Temperaturmodelle sind zum Beispiel aus der DE 43 33 591 A1, DE 196 21 946 C1, DE 198 12 234 A1 und der EP 1 253 321 A2 bekannt.

Keines der bekannten Verfahren berücksichtigt jedoch die Besonderheit einer geschlossenen Niveauregelanlage in einem Kraftfahrzeug, bei der mit Hilfe des Kompressors Druckluft sowohl aus dem Druckluftspeicher in die Luftfedern als auch von den Luftfedern in den Druckluftspeicher überführt wird.

Der Erfindung liegt die Aufgabe zugrunde, ein Verfahren zur Steuerung eines Kompressors für eine Niveauregelanlage zu schaffen, dass die Besonderheiten einer geschlossenen Niveauregelanlage berücksichtigt und somit für eine solche besonders geeignet ist.

Gemäß den kennzeichnenden Merkmalen des Anspruchs 1 wird die Aufgabe dadurch gelöst, dass zur Bestimmung der aktuellen Kompressortemperatur der Vordruck (von dem ausgehend der Kompressor fördert) und der Gegendruck (gegen den der Kompressor fördert) des Kompressors berücksichtigt wird.

Der mit der Erfindung erzielte Vorteil ist insbesondere darin zu sehen, dass bei dem erfindungsgemäßen Verfahren die Besonderheit einer geschlossenen Niveauregelanlage berücksichtigt wird, indem bei der Bestimmung der aktuellen Kompressortemperatur während des Kompressorlaufes der Vordruck und der Gegendruck des Kompressors einfließt. Hierdurch kann auf einfache Art und Weise eine optimale Kompressorlaufzeit erreicht werden, ohne dass die Gefahr besteht, dass der Kompressor durch Überschreiten der Grenztemperatur beschädigt wird. Hierbei wird die Kompressorlaufzeit auf die internen Druckverhältnisse innerhalb der geschlossenen Niveauregelanlage abgestellt. Ein weiterer Vorteil der Erfindung ist darin zu sehen, dass die Bestimmung der aktuellen Kompressortemperatur während des Kompressorlaufes ohne einen Temperatursensor erfolgt.

Gemäß einer Weiterbildung der Erfindung nach Anspruch 2 wird während des Kompressorlaufes nach jeder vergangenen Zeiteinheit dt die aktuelle Kompressortemperatur um einen Temperaturwert dT angepasst, der von der Differenz $p_{gegen} - p_{vor}$ zwischen dem Gegendruck und dem Vordruck abhängig ist. Der mit der Weiterbildung erreichte Vorteil ist darin zu sehen, dass eine besondere gute Ausschöpfung der Kompressorlaufzeit bis zum Erreichen der Grenztemperatur durch die Berücksichtigung der Differenz zwischen dem Gegendruck und dem Vordruck des Kompressors gewährleistet ist. Ist beispielsweise die Differenz klein oder nahezu 0 (entspricht also der Vordruck ungefähr dem Gegendruck), so kann der Kompressor der geschlossenen Druckmittelanlage ohne große Leistungsaufnahme fördern, so dass er sich nur langsam erhitzt. Demnach wird in diesem Fall die aktuelle Kompressortemperatur nach jeder vergangenen Zeiteinheit nur um einen kleinen Temperaturwert angepasst und es kommt bis zum Erreichen der Grenztemperatur zu einer vergleichsweisen langen Kompressorlaufzeit: Ist hingegen die genannte Differenz positiv und groß, so wird von dem Kompressor eine hohe Leistung abgefordert, so dass er sich auch stark erhitzt. In diesem Fall wird die aktuelle Kompressortemperatur nach jeder vergangenen Zeiteinheit um einen größeren Temperaturwert als in dem zuerst genannten Fall angepasst, so dass die Grenztemperatur schneller erreicht wird, als bei einer kleinen Differenz.

Gemäß einer Weiterbildung der Erfindung nach Anspruch 3 ist der funktionale Zusammenhang zwischen dem Temperaturwert dT und der Differenz $p_{gegen} - p_{vor}$ als Kennfeld in einer Steuereinheit für den Kompressor hinterlegt.

Der Vorteil dieser Weiterbildung ist darin zu sehen, dass auf einfache Art und Weise der Temperaturwert dT, um den die aktuelle Kompressortemperatur angepasst wird, in Abhängigkeit von der Differenz $p_{gegen}$ - $p_{vor}$ aus dem Kennfeld ausgelesen werden kann. Ein weiterer Vorteil dieser Weiterbildung ist darin zu sehen, dass für jede mögliche Differenz $p_{gegen}$ - $p_{vor}$ ein dazugehöriger Temperaturwert dT hinterlegt werden kann und somit eine besondere genaue Anpassung der aktuellen Kompressortemperatur möglich ist. Hierdurch wird eine optimale Ausnutzung der Kompressorlaufzeit bis zum Erreichen der Grenztemperatur erzielt.

Gemäß einer Weiterbildung der Erfindung nach Anspruch 4 wird in Abhängigkeit von der Differenz $p_{gegen}$ - $p_{vor}$, die zu Beginn des Kompressorlaufes vorliegt, ein fester Temperaturwert dT vorgegeben. Der Vorteil dieser Weiterbildung ist insbesondere darin zu sehen, dass die Differenz nur ein einziges Mal zu Beginn des Kompressorlaufes bestimmt werden muss. Eine Bestimmung der Differenz während des Kompressorlaufes entfällt. Ein weiterer Vorteil dieser Weiterbildung ist darin zu sehen, dass nur ein einziger Temperaturwert dT vorgegeben wird, der dann während des gesamten Kompressorlaufes zur Anpassung der aktuellen Kompressortemperatur benutzt wird. Das erfindungsgemäße Verfahren ist somit besonders einfach und mit geringen Rechenkapazitäten in der Steuereinheit des Kompressors durchführbar. Somit kann eine einfach ausgebildete Steuereinheit benutzt werden.

Gemäß einer Weiterbildung der Erfindung nach Anspruch 5 gibt man bei einer Differenz $p_{gegen}$ - $p_{vor}$, die größer als 0 ist, den Temperaturwert $dT_{max}$ vor, der der maximal in der geschlossenen Druckmittelanlage möglichen Differenz $p_{gegen}$ - $p_{vor}$ zugeordnet ist. Der Vorteil dieser Weiterbildung wird verständlich, wenn man das Folgende bedenkt: Bei der maximal möglichen Differenz müsste der Kompressor während der Druckmittelförderung mit maximaler Leistung fördern. Somit würde bei der maximalen möglichen Differenz während des Kompressorlaufes die stärkste Temperaturerhöhung stattfinden, so dass auch der vorgegebene Temperaturwert dT dem maximal möglichen Temperaturwert dT entsprechen würde. Bei einer Differenz, die kleiner ist als die maximal mögliche Differenz in dem System, ist die tatsächliche Temperaturerhöhung des Kompressors während des Kompressorlaufes mit Sicherheit niedriger. Mit der Weiterbildung wird also der Vorteil erreicht, dass nur ein einziges Mal ein Temperaturwert dT vorgegeben wird und dennoch sichergestellt ist, dass die tatsächliche Kompressortemperatur langsamer steigt als die berechnete Kompressortemperatur. Dementsprechend ist auf einfache Art und Weise sichergestellt, dass die Grenztemperatur des Kompressors während des Kompressorlaufes nicht überschritten wird.

Gemäß einer Weiterbildung der Erfindung nach Anspruch 6 gibt man bei einer Differenz $p_{gegen}$ - $p_{vor}$, die kleiner oder gleich 0 ist, den Temperaturwert dT vor, der der Differenz $p_{gegen}$ - $p_{vor}$ gleich 0 zugeordnet ist. Durch diese Weiterbildung werden die analogen Vorteile für eine Differenz $p_{gegen}$ - $p_{vor}$ erreicht, die im Zusammenhang mit Anspruch 5 erläutert worden sind (Näheres s. Figurenbeschreibung).

Gemäß einer Weiterbildung der Erfindung nach Anspruch 7 wird zu Beginn des Kompressorlaufes eine maximales Laufzeit für den Kompressor vorgegeben. Die maximale Laufzeit wird so vorgegeben, dass die Grenztemperatur nach Ablauf der maximalen Laufzeit mit Sicherheit noch nicht erreicht ist. Durch diese Weiterbildung wird der Vorteil erreicht, dass ein Abschalten des Kompressors vor Erreichen der Grenztemperatur auch dann gewährleistet ist, wenn die Kompressortemperatur durch einen Fehler in der Niveauregelanlage (z. B. durch Rechenfehler in der Steuereinheit der Niveauregelanlage) nicht oder falsch berechnet wird.

Gemäß einer Weiterbildung der Erfindung nach Anspruch 8 wird bei der Vorgabe eines Temperaturwertes dT zusätzlich die Fahrtgeschwindigkeit des Kraftfahrzeuges berücksichtigt. Der Weiterbildung liegt der Gedanke zugrunde, dass mit zunehmender Fahrtgeschwindigkeit das Kraftfahrzeug und somit auch der Kompressor der Niveauregelanlage durch den Fahrtwind gekühlt wird. Somit können mit zunehmender Fahrtgeschwindigkeit der oder die Temperaturwerte dT verringert werden.

Gemäß einer Weiterbildung der Erfindung nach Anspruch 9 wird bei der Vorgabe eines Temperaturwertes dT zusätzlich die elektrische Kompressorspannung berücksichtigt. Der Weiterbildung liegt der Gedanke zugrunde, dass sich mit wachsender elektrischer Kompressorspannung der Volumenstrom des Druckmittels in dem Kompressor erhöht und somit die erzeugte Wärme in dem Kompressor ansteigt. Mit der Weiterbildung wird der Vorteil erreicht, dass dieser Anstieg bei der Vorgabe des Temperaturwertes dT berücksichtigt wird.

Ein Ausführungsbeispiel und weitere Vorteile der Erfindung werden im Zusammenhang mit den nachfolgenden Figuren erläutert, darin zeigt:

Fig. 1 eine geschlossene Niveauregelanlage in schematischer Darstellung,
Fig. 2 ein Diagramm,
Fig. 3 ein Diagramm,
Fig. 4 ein Diagramm,
Fig. 5 ein Diagramm.

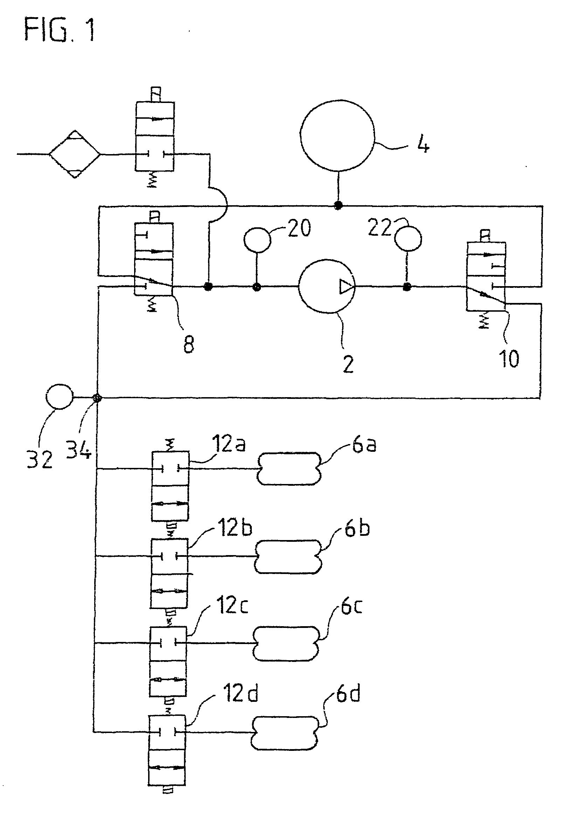

Figur 1 zeigt eine geschlossene Niveauregelanlage in schematischer Darstellung mit einem Kompressor 2, einem Druckluftspeicher 4 und Luftfedern 6a bis 6d, mit denen der Aufbau eines Kraftfahrzeuges gegenüber seinen Achsen federnd gelagert wird. Zum Auffüllen einer der Luftfedern 6a bis 6d (z. B. der Luftfeder 6a) wird mit Hilfe des Kompressors 2 Druckluft aus dem Druckluftspeicher 4 über die schaltbaren Wegeventile 8, 10 und 12a überführt. Die schaltbaren Wegeventile 8 und 10 nehmen dabei die in der Figur 1 gezeigte Schaltposition ein, das Wegeventil 12a wird in seine zweite Schaltposition überführt.. Es ist ebenfalls möglich, mit Hilfe des Kompressors 2 Druckluft aus den Luftfedern 6a bis 6d in den Druckluftspeicher 4 zu überführen. In diesem Fall werden die schaltbaren Wegeventile 8, 10 und 12a angesteuert, so dass sie in ihre andere Schaltposition übergehen. Eine derartige geschlossene Niveauregelanlage ist an sich bekannt und z. B. ausführlich in ihrem Aufbau und ihrer Funktionsweise in der DE 199 59 556 C1 beschrieben.

Wenn mit Hilfe des Kompressors 2 Druckluft aus dem Druckluftspeicher 4 in eine oder mehrere der Luftfedern 6a bis 6d überführt wird, verändert sich während des Kompressorlaufes die Kompressortemperatur. Das Gleiche gilt, wenn mit Hilfe des Kompressors 2 Druckluft aus einer oder mehrerer der Luftfedern 6a bis 6d in den Kompressor 4 überführt wird. Es muss sichergestellt werden, dass der Kompressor 2 eine bestimmte Grenztemperatur nicht überschreitet, damit er nicht beschädigt wird. Aus diesem Grunde wird erfindungsgemäß während des Kompressorlaufes in der (nicht gezeigten) Steuereinheit der Niveauregelanlage die Kompressortemperatur ständig überwacht und der Kompressor 2 spätestens bei Erreichen einer Grenztemperatur abgeschaltet (der Kompressor 2 wird früher abgeschaltet, falls der Regelvorgang vor Erreichen der Grenztemperatur beendet ist; dies ist dann der Fall, wenn der Fahrzeugaufbau das gewünschte Sollniveau erreicht hat). Bei der Bestimmung der aktuellen Kompressortemperatur wird der Vordruck und der Gegendruck des Kompressors 2 berücksichtigt. Hierbei entspricht der Luftdruck in dem Druckluftspeicher 4 dem Vordruck und der Luftdruck in den Luftfedern 6a bis 6d, in die gefördert wird, dem Gegendruck, wenn mit Hilfe des Kompressors 2 Druckluft aus dem Druckluftspeicher 4 in die Luftfedern 6a bis 6d überführt wird. Umgekehrt handelt es sich bei dem Luftdruck in den Luftfedern 6a bis 6d, aus denen gefördert wird, um den Vordruck, und bei dem Luftdruck in den Druckluftspeicher 4 um den Gegendruck, wenn mit Hilfe des Kompressors 2 Druckluft aus den Luftfedern 6a bis 6d in den Druckluftspeicher 4 überführt wird.

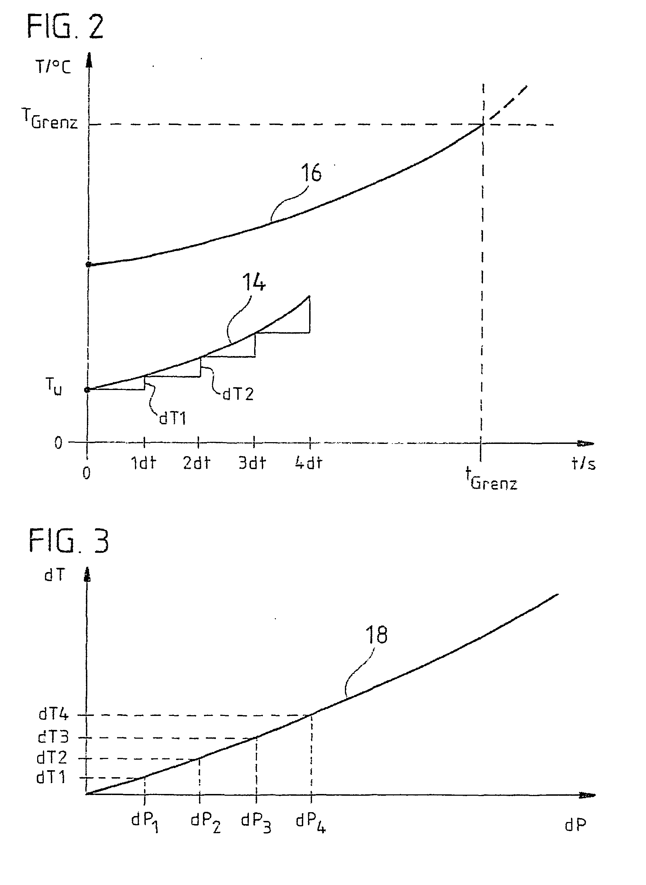

Anhand der Figuren 2 bis 5 wird erläutert, wie die Kompressortemperatur während des Kompressorlaufes unter Berücksichtigung des Vordruckes und des Gegendruckes überwacht wird. Bei der Überwachung der Kompressortemperatur während des Kompressorlaufes wird davon ausgegangen, dass die aktuelle Kompressortemperatur zu Beginn des Kompressorlaufes bekannt ist. So entspricht diese aktuelle Kompressortemperatur der Umgebungstemperatur, wenn mit Hilfe des Kompressors eine bestimmte zeitlang keine Regelung in der Niveauregelanlage vorgenommen wurde und sich der Kompressor somit auf die Umgebungstemperatur abkühlen konnte. Falls eine vollständige Abkühlung des Kompressors nach einem vorherigem Regelvorgang nicht erfolgen konnte (weil der Zeitraum bis zum nächsten Regelvorgang zu kurz ist), so ergibt sich die aktuelle Kompressortemperatur zu Beginn des neuen Regelvorganges wie folgt: Aus der vorherigen Regelung ist aufgrund der ständigen Überwachung der Kompressortemperatur diejenige Kompressortemperatur bekannt, die der Kompressor zum Abschluss der Regelung aufweist. Nach Abschluss der letzten Regelung wird in der Steuereinheit der Niveauregelanlage gemessen, wieviel Zeit seit der letzten Regelung vergangen ist. Für die verstrichene Zeit wird eine bestimmte Abkühlung des Kompressors angenommen, so dass sich für jeden zeitlichen Verlauf die aktuelle Kompressortemperatur des nicht laufenden Kompressors ergibt.

Figur 2 zeigt ein Diagramm, in dem die Temperatur T über der Zeit t ausgetragen ist. Dem Diagramm ist eine erste Kennlinie 14 für einen ersten Regelvorgang zu entnehmen. Der Regelvorgang beginnt zum Zeitpunkt t = 0 und zu diesem Zeitpunkt möge die aktuelle Kompressortemperatur der Umgebungstemperatur Tu entsprechen (d. h. der letzte Regelvorgang ist solange her, dass der Kompressor sich auf diese Umgebungstemperatur abkühlen konnte). Ferner wird für den Regelvorgang davon ausgegangen, dass während des Regelvorganges der Vordruck kleiner ist als der Gegendruck. In diesem Fall ist die Differenz $dp = p_{gegen} - p_{vor} > 0$, so dass sich der Kompressor während des Kompressorlaufes erwärmen wird. Dies gibt die Kennlinie 14 auch bereits qualitativ wieder, da die Temperatur T des Kompressors 2 mit wachsender Zeit t ansteigt. Im Folgenden wird erläutert, wie der Temperaturanstieg erfindungsgemäß bestimmt wird: Zum Zeitpunkt t = 0 ist die Kompressortemperatur T = Tu. Nach einer Zeiteinheit dt (also zur Zeit t = dt) wird die Kompressortemperatur Tu um einen Temperaturwert $dT_1$ angepasst, wobei $dT_1$ in seiner Größe von $dp = p_{gegen} - p_{vor}$ abhängig ist. Die aktuelle Kompressortemperatur zum Zeitpunkt t = dt ergibt sich demnach aus $T = Tu + dT_1$. Nach einer weiteren Zeiteinheit dt (t = 2 dt) wird die aktuelle Kompressortemperatur zu diesem Zeitpunkt wiederum um einen Wert $dT_2$ angepasst, der ebenfalls von $dp = p_{gegen} - p_{vor}$ zu diesem Zeitpunkt abhängig ist. Die aktuelle Kompressortemperatur zu diesem Zeitpunkt ergibt sich also aus $T = Tu + dT_1 + dT_2$. Zu einem beliebigen Zeitpunkt ergibt sich also die aktuelle Kompressortemperatur T wie folgt:

$$T = Tu + dT_1 + dT_2 + \ldots\ldots + dTn,$$

wobei "n" für die Anzahl der vergangenen Zeiteinheiten steht. Jeder der Werte $dT_1$ bis dTn ist abhängig von der Differenz $dp = p_{gegen} - p_{vor}$ zu dem entsprechenden Zeitpunkt.

Wenn die wie oben erläutert berechnete Kompressortemperatur T vor Beendigung des aktuellen Regelvorganges einen Grenzwert $T_{grenz}$ erreicht, wird der Kompressor abgeschaltet, damit er nicht aufgrund einer Überhitzung beschädigt wird. Der durch die Kennlinie 14 dargestellte Regelvorgang ist jedoch zum Zeitpunkt t = 4 dt beendet (der Fahrzeugaufbau hat also bereits das Sollniveau erreicht), zu dem die aktuelle Temperatur noch weit unterhalb der Grenztemperatur $T_{grenz}$ liegt, wie es auch der Figur 2 zu entnehmen ist.

Der Figur 2 ist eine weitere Kennlinie 16 für einen weiteren Regelvorgang in der Niveauregelanlage zu entnehmen. Auch bei dem Regelvorgang gemäß der Kennlinie 16 wird davon ausgegangen, dass während des Regelvorganges die Differenz dp > 0 ist, d. h. der Gegendruck ist größer als der Vordruck. Zum Zeitpunkt t = 0 weist der Kompressor eine Temperatur auf, die oberhalb von Tu liegt, d. h. der Kompressor hatte nach dem letzten Regelvorgang in der Niveauregelanlage nicht die Möglichkeit, sich vollständig auf die Umgebungstemperatur abzukühlen. Ausgehend von dieser aktuellen Kompressortemperatur zum Zeitpunkt t = 0 wird während des Kompressorlaufes (d. h. während des Regelvorganges) die aktuelle Kompressortemperatur zu einem beliebigen Zeitpunkt so berechnet, wie es oben erläutert worden ist. Zum Zeitpunkt t = $t_{grenz}$ erreicht die aktuelle Kompressortemperatur T den Temperaturgrenzwert $T_{grenz}$ und der Kompressor wird abgeschaltet, auch wenn der Regelvorgang zu diesem Zeitpunkt noch nicht abgeschlossen sein sollte. Damit wird einer Überhitzung des Kompressors wirksam vorgebeugt.

Figur 3 zeigt ein Diagramm, in dem dp = $p_{gegen}$ - $p_{vor}$ über dem Temperaturwert dT aufgetragen ist. Dem Diagramm ist eine Kennlinie 18 zu entnehmen, die den Zusammenhang zwischen dp und dT für alle Werte von dp > 0 wiedergibt. Eine entsprechende Kennlinie ist in der Steuereinheit der Niveauregelanlage gespeichert und im Folgenden wird erläutert, wie mit Hilfe einer solchen Kennlinie 18 die Temperaturwerte $dT_1$ bis $dT_n$ (s. auch Figurenbeschreibung zu Figur 2) bestimmt werden können. Zum Zeitpunkt dt (s. Figur 2) möge dp = $dp_1$ sein. Aus der Kennlinie 18 kann dann das dazugehörige $dT_1$ abgelesen werden. Entsprechend wird für die Werte $dp_2$, $dp_3$, $dp_4$........ $dp_n$ vorgegangen. Zur Berechnung von dp = $p_{gegen}$ - $p_{vor}$ zu einem bestimmten Zeitpunkt kann beispielsweise mit Hilfe von Drucksensoren 20, 22 (s. Figur 1) der aktuelle Vordruck und der aktuelle Gegendruck des Kompressors 2 gemessen werden.

Bei den Erläuterungen im Zusammenhang mit den Figuren 2 und 3 wurde davon ausgegangen, dass der Gegendruck während der erläuterten Regelvorgänge größer ist als der Vordruck, so dass dp = $p_{gegen}$ - $p_{vor}$ > 0 ist. Es ist jedoch ebenfalls möglich, dass während eines Regelvorganges der Gegendruck kleiner als der Vordruck ist, so dass dp = $p_{gegen}$ - $p_{vor}$ < Null ist. Auch für derartige Regelvorgänge ist in der Steuereinheit der Niveauregelanlage eine Kennlinie 18 entsprechende Kennlinie gespeichert, aus der die Temperaturwerte dT entsprechend den oberen Erläuterungen bestimmt werden können.

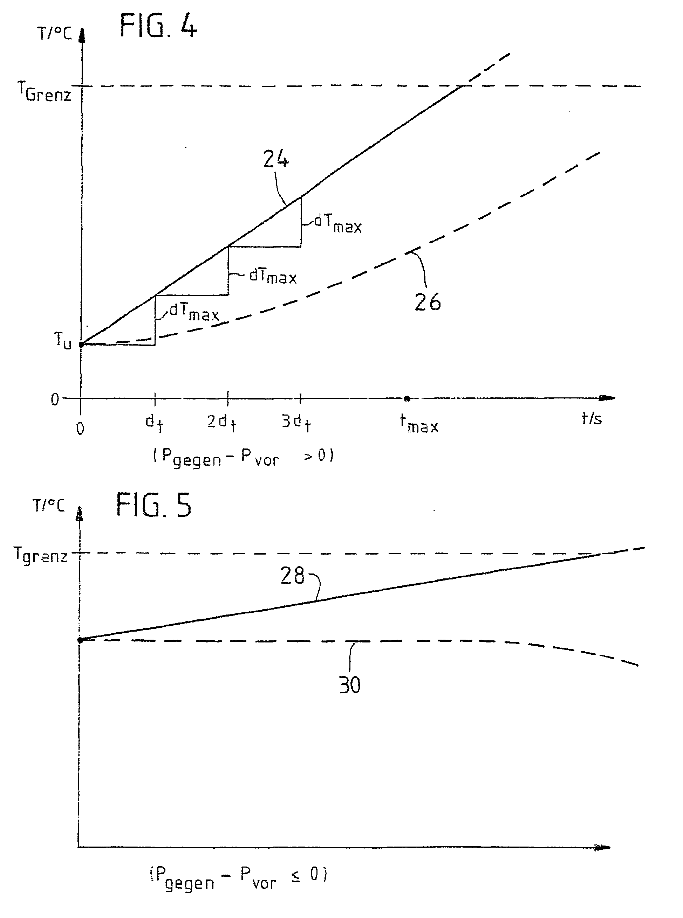

Figur 4 zeigt ein Diagramm, in dem ebenfalls die aktuelle Kompressortemperatur T über der Zeit t aufgetragen ist. Dem Diagramm ist eine erste Kennlinie 24 für einen Regelvorgang zu entnehmen. Zum Zeitpunkt t = 0, also zu Beginn des Regelvorganges, möge die aktuelle Kompressortemperatur T =Tu sein. Darüber hinaus möge zu Beginn des Regelvorganges (t = 0) der Gegendruck für den Regelvorgang größer als der Vordruck sein, so dass die Differenz dp = $p_{gegen}$ - $p_{vor}$ > 0 ist (dies ist z. B. der Fall, wenn mit Hilfe des Kompressors 2 (s. Fig. 1) Druckluft aus dem Druckluftspeicher 4 in ein oder mehrere der Luftfedern 6a, ..., 6d überführt werden soll und der Luftdruck in diesem größer ist als im Druckluftspeicher 4). In diesem Fall wird sich der Kompressor während des Regelvorganges erwärmen, d. h. die aktuelle Kompressortemperatur T ist während des Regelvorganges um positive Temperaturwerte dT zu erhöhen. Zum Zeitpunkt t = 0 wird für den gesamten Regelvorgang gemäß der Kennlinie 24 ein einziger Temperaturwert $dT_{max}$ festgelegt, um den sich innerhalb einer Zeiteinheit dt der Kompressor erwärmen würde, wenn die Differenz dp = $p_{gegen}$ - $p_{vor}$ den im System maximal möglichen Wert annehmen würde, d. h. der Gegendruck sein zulässiges Maximum und der Vordruck sein zulässiges Minimum aufweisen würde. In diesem Fall würde sich der Kompressor während einer Zeiteinheit dt maximal erwärmen, für alle anderen, kleineren Werte von dp wäre die Erwärmung des Kompressors geringer. Der so festgelegte Temperaturwert $dT_{max}$ wird nach jeder Zeiteinheit dt zum aktuellen Temperaturwert T des Kompressors hinzu addiert, so dass sich dieser ergibt:

$$T = Tu + n \times dT_{max,}$$

wobei "n" der Anzahl der verstrichenen Zeiteinheiten entspricht. Der Regelvorgang wird abgebrochen, wenn die berechnete aktuelle Kompressortemperatur, die gemäß der Kennlinie 24 berechnet wird, den Temperaturwert $T_{grenz}$ erreicht, und zwar auch dann, wenn der Regelvorgang noch nicht abgeschlossen ist. Somit ist einer Beschädigung des Kompressors durch Überhitzung sicher vorgebeugt. Durch die einmalige Festlegung des Temperaturwertes $dT_{max}$ für den Fall, dass dp zu Beginn des Regelvorganges größer als 0 ist, wird der Vorteil erreicht,dass nur zu Beginn des aktuellen Regelvorganges (d. h. zum Zeitpunkt t = 0) festgestellt werden muss, dass dp größer als 0 ist. Danach brauchen während des Regelvorganges keine Bestimmungen von dp und somit keine Druckmessungen mehr vorgenommen zu werden.

Der Figur 4 ist eine weitere Kennlinie 26 zu entnehmen, bei der die aktuelle Kompressortemperatur genauer berechnet wird, und zwar so wie es bereits im Zusammenhang mit der Figur 2 im Zusammenhang mit der Kennlinie 14 erläutert worden ist. Die Kennlinie 26 verläuft zwangsläufig unterhalb der Kennlinie 24, da bei der Kennlinie 24 vom maximal möglichen Temperaturanstieg im Kompressor und bei der Kennlinie 26 von dem tatsächlichen Temperaturanstieg im Kompressor ausgegangen wird, der kleiner oder gleich dem maximal möglichen Temperaturanstieg ist. Dies bedeutet, dass durch die einfache Berechnungsmethode der aktuellen Kompressortemperatur gemäß der Kennlinie 24 eine hohe Sicherheit gewährleistet ist.

Es ist möglich, zusätzlich zu der Grenztemperatur $T_{grenz}$ eine maximale Laufzeit $t_{max}$ zür den Kompressor festzulegen, die so gewählt wird, dass der Kompressor zu diesem Zeitpunkt sicher noch eine Temperatur unterhalb der Grenztemperatur $T_{grenz}$ aufweist. Der Regelvorgang kann nach Ablauf der Zeitspanne $T_{max}$ abgebrochen werden. In diesem Fall ist einer Überhitzung des Kompressors durch eine einfache Zeitmessung auch für den Fall sicher vorgebeugt, dass die aktuelle Kompressortemperatur aufgrund eines Fehler in der Steuereinheit der Niveauregelanlage etc. nicht richtig berechnet wird.

Figur 5 zeigt ein Diagramm, bei dem ebenfalls die aktuelle Kompressortemperatur T über der Zeit t aufgetragen ist. Im Gegensatz zu Figur 4 wird bei dem Diagramm gemäß Figur 5 jedoch davon ausgegangen, dass der Gegendruck zu Beginn des Regelvorganges kleiner ist als der Vordruck oder diesem entspricht, so dass die Differenz d = $p_{gegen}$-$p_{vor}$ < 0 ist. Dies ist beispielsweise der Fall, wenn der Kompressor 2 (s. Figur 1) von dem Druckluftspeicher 4 in mindestens eine der Luftfedern 6a bis 6d fördert und hierbei der Luftdruck in den Luftfedern 6a bis 6d kleiner ist als im Druckluftspeicher 4. Dies ist ebenfalls dann der Fall, wenn mit Hilfe des Kompressors 2 Druckluft aus mindestens einer der Luftfedern 6a bis 6d in dem Druckluftspeicher 4 überführt wird und der Luftdruck in dem Druckluftspeicher 4 kleiner ist als in den Luftfedern 6a bis 6d. Für den Fall, dass die Differenz dp < 0 ist, erwärmt sich der Kompressor während des Kompressorlaufes nur schwach (dies ist dann der Fall, wenn die Differenz dp ungefähr gleich Null ist) bzw. wird evtl. sogar abgekühlt (dies kann dann der Fall sein, wenn dp deutlich kleiner ist als 0). Es ist also für alle Fälle, bei denen zu Beginn des Kompressorlaufes dp < 0 ist, möglich, bei der Berechnung der aktuellen Kompressortemperatur T während des Kompressorlaufes davon auszugehen, dass der Kompressor sich pro Zeiteinheit nur schwach um einen Wert $dT_{min}$ erwärmt. Aus diesem Grunde kann zu der aktuellen Kompressortemperatur T, die der Kompressor während eines bestimmten Zeitpunktes hatte, nach Ablauf einer Zeiteinheit zu dieser Erwärmung gehörende Temperaturwert $dT_{min}$ hinzuaddiert werden, um die aktuelle Kompressortemperatur T zu dem späteren Zeitpunkt abzuschätzen. Entsprechend wird nach jeder Zeiteinheit vorgegangen, so dass sich für die abgeschätzte Kompressortemperatur T die in der Figur 5 gezeigte Kennlinie 28 in Form einer Geraden ergibt. Falls die Kompressortemperatur T gemäß der Kennlinie 28 vor Beendigung des Regelvorganges die Grenztemperatur $T_{grenz}$ erreicht, wird der Kompressor abgeschaltet, so einer Überhitzung des Kompressors sicher vorgebeugt ist.

Der Figur 5 ist eine weitere Kennlinie 30 zu entnehmen, wie die tatsächliche Temperaturerwärmung des Kompressor für eine Fall wiedergibt, in dem die Differenz dp deutlich kleiner als 0 ist. Dem Diagramm ist zu entnehmen, dass die Kennlinie 30 zu jedem Zeitpunkt T unterhalb der Kennlinie 28 verläuft, nach der immer geregelt wird, wenn die Differenz dp < 0 ist. Durch die einfache Regelung gemäß der Kennlinie 28 ist also für alle Fälle, in denen die Differenz dp < 0 ist, sichergestellt, dass der Kompressor sich nicht über die Grenztemperatur $T_{grenz}$ hinaus erwärmt.

Die Regelungen, die im Zusammenhang mit den Figuren 4 und 5 erläutert worden sind, haben den Vorteil, dass außerschließlich zu Beginn der Regelung die Differenz dp = $p_{gegen}$ - $p_{vor}$ bestimmt werden muss. In Abhängigkeit davon, ob dp > oder < gleich 0 ist, wird ein Temperaturwert dT festgelegt, der über die ganze Regelung beibehalten wird. Der Gegendruck und der Vordruck kann zu Beginn des Regelvorganges mit Hilfe der in der Figur 1 gezeigten Drucksensoren 20, 22 bestimmt werden. Alternativ ist es möglich, den Gegendruck und den Vordruck und damit die Differenz dp mit Hilfe eines einzigen Drucksensors 32 auf einfache Art und Weise zu bestimmen, was im Folgenden erläutert wird (s. auch Fig. 1). Nehmen wir an, der Fahrzeugaufbau des Kraftfahrzeuges soll an der Vorderachse angehoben werden, so dass mit Hilfe des Kompressors 2 die Luftfedern 6a und 6b mit Druckluft aus dem Druckluftspeicher 4 befüllt werden müssen. Während des Regelvorganges wird mit Hilfe von in der Figur 1 nicht gezeigten Höhensensoren ständig das aktuelle Niveau des Fahrzeugaufbaus überwacht. Der Regelvorgang ist beendet, wenn das aktuelle Niveau des Fahrzeugaufbaus das Sollniveau erreicht hat. Kurz vor Erreichen des Sollniveaus wird mit Hilfe des Drucksensors 32 der Luftdruck in den Luftfedern 6a und 6b gemessen. Dazu wird mit Hilfe des Drucksensors 32 der Luftdruck in dem Punkt 34 bestimmt, der dem Luftdruck in den Luftfedern 6a und 6b entspricht. Zusätzlich wird das Volumen in den Luftfedern 6a und 6b mit Hilfe des Signals der Höhensensoren in an sich bekannter Art und Weise bestimmt. Die Luftmenge in den Luftfedern 6a und 6b ergibt sich dann aus dem Produkt des Luftdruckes in diesen Luftfedern 6a, 6b und dem Volumen der Luftfedern 6a, 6b. Bei dem vorherigen Regelvorgang an den Luftfeder 6c, 6d der Hinterachse des Kraftfahrzeuges (das Kraftfahrzeug wird immer wechselseitig an der Vorderachse und der Hinterachse geregelt, um ein vorgegebenes Sollniveau zu erreichen) ist auf die gleiche Art und Weise die Luftmenge in den Luftfedern 6c, 6d bestimmt worden.

Die Luftmenge in dem Speicher 4 ergibt sich dann daraus, dass man von der Gesamtluftmenge der Niveauregelanlage (die bekannt ist, da es sich um eine geschlossene Niveauregelanlage handelt) die Luftmenge in den Luftfedern 6a, 6b der Vorderachse und in den Luftfedern 6c, 6d der Hinterachse abzieht. Der Druck in dem Druckluftspeicher 4 ergibt sich dann daraus, dass man die so ermittelte Luftmenge durch das bekannte Volumen des Druckluftspeichers 4 teilt.

Nach Abschluss der Regelung an den Luftfedern 6a, 6b der Vorderachse sind in der Steuereinheit der Niveauregelanlage also die Luftdrücke in den Luftfedern 6a, 6b der Vorderachse, den Luftfedern 6c, 6d der Hinterachse und in dem Druckluftspeicher 4 bekannt. Bei dem folgenden Regelvorgang an den Luftfedern 6c, 6d der Hinterradachse kann dann also die Differenz dp = $p_{gegen}$ - $p_{vor}$ bestimmt werden. Für den Fall, dass mit Hilfe des Kompressors 2 Druckluft aus dem Druckluftspeicher 4 in die Luftfedern 6c, 6d überführt werden muss, ergibt sich dp aus der Differenz $p_{(Luftfedern\ 6a,\ 6d)}$ - $p_{(Druckluftspeicher\ 4)}$. Für den Fall, dass Druckluft aus den Luftfedern 6c, 6d abgelassen werden muss, wird mit Hilfe des Kompressors 2 Druckluft aus diesen in den Druckluftspeicher 4 überführt. In diesem Fall ergibt sich die Differnz dp aus $p_{(Druckluftspeicher\ 4)}$ - $p_{(Luftfedern\ 6c,\ 6d.)}$

**Bezugszeichenliste**

(Teil der Beschreibung)

| | |
|---|---|
| 2 | Kompressor |
| 4 | Druckluftspeicher |
| 6a, ..., 6d | Luftfeder |
| 8, 10, 12a, ..., 12d | Schaltbares Wegeventil |
| 14, 16, 18 | Kennlinie |
| 20, 22 | Drucksensor |
| 24, 26, 28, 30 | Kennlinie |
| 32 | Drucksensor |

**Patentansprüche**

1. Verfahren zur Steuerung eines Kompressors (2), der zur Druckmittelförderung in einer geschlossenen Druckmittelanlage, vorzugsweise zur Druckmittelförderung in einer geschlossenen Niveauregelanlage eines Kraftfahrzeuges, geeignet ist, bei dem zumindest während des Kompressorlaufes ständig die aktuelle Kompressortemperatur bestimmt wird und der Kompressor (2) spätestens bei Erreichen einer Grenztemperatur abgeschaltet wird, **dadurch gekennzeichnet, dass** zur Bestimmung der aktuellen Kompressortemperatur der Vordruck und der Gegendruck des Kompressors (2) berücksichtigt wird.

2. Verfahren zur Steuerung eines Kompressors (2) nach Anspruch 1, **dadurch gekennzeichnet, dass** während des Kompressorlaufes nach jeder vergangenen Zeiteinheit dt die aktuelle Kompressortemperatur um einen Temperaturwert dT angepasst wird, der von der Druckdifferenz $p_{gegen}$ - $p_{vor}$ zwischen dem Gegendruck und dem Vordruck abhängig ist.

3. Verfahren zur Steuerung eines Kompressors (2) nach Anspruch 2, **dadurch gekennzeichnet, dass** der funktionale Zusammenhang zwischen dem Temperaturwert dT und der Druckdifferenz $P_{gegen}$ - $p_{vor}$ zwischen dem Gegendruck und dem Vordruck als Kennfeld in einer Steuereinheit für den Kompressor (2) hinterlegt ist.

4. Verfahren zur Steuerung eines Kompressors (2) nach Anspruch 2, **dadurch gekennzeichnet, dass** in Abhängigkeit von der Druckdifferenz $p_{gegen}$ - $p_{vor}$ zwischen dem Gegendruck und dem Vordruck die zu Beginn des Kompressorlaufes vorliegt, ein fester Temperaturwert dT vorgegeben wird.

5. Verfahren zur Steuerung eines Kompressors (2) nach Anspruch 4, **dadurch gekennzeichnet, dass** man bei einer Druckdifferenz $p_{gegen}$ - $p_{vor}$ zwischen dem Gegendruck und dem Vordruck, die größer als Null ist, den Temperaturwert dT vorgibt, der der maximal möglichen Druckdifferenz $p_{gegen}$ - $p_{vor}$ zwischen dem Gegendruck und dem vordruck zugeordnet ist.

6. Verfahren zur Steuerung eines Kompressors (2) nach Anspruch 4, **dadurch gekennzeichnet, dass** man bei einer Druckdifferenz $p_{gegen}$ - $p_{vor}$ zwischen dem Gegendruck und dem vordruck, die kleiner oder gleich Null ist, den Temperaturwert dT vorgibt, der der Differenz $p_{gegen}$ - $p_{vor}$ = Null zugeordnet ist.

**7.** Verfahren zur Steuerung eines Kompressors (2) nach einem der Ansprüche 1 bis 6, **dadurch gekennzeichnet, dass** zu Beginn des Kompressorlaufes eine maximale Laufzeit für den Kompressor (2) vorgegeben wird.

**8.** Verfahren zur Steuerung eines Kompressors (2) nach einem der Ansprüche 2 bis 7, **dadurch gekennzeichnet, dass** bei der Vorgabe eines Temperaturwertes dT zusätzlich die Fahrtgeschwindigkeit des Kraftfahrzeuges berücksichtigt wird.

**9.** Verfahren zur Steuerung eines Kompressors (2) nach einem der Ansprüche 2 bis 8, **dadurch gekennzeichnet, dass** bei der Vorgabe eines Temperaturwertes dT zusätzlich die elektrische Kompressorspannung berücksichtigt wird.

**10.** Bedarfsabhängig ein- und ausschaltbarer Kompressor (2) für eine geschlossene Druckmittelanlage, vorzugsweise eine geschlossene Niveauregelanlage eines Kraftfahrzeuges, dem eine Steuereinheit zugeordnet ist, die zumindest während des Kompressorlaufes ständig die aktuelle Kompressortemperatur bestimmt und den Kompressor (2) spätestens bei Erreichen einer gespeicherten Grenztemperatur abgeschaltet, **dadurch gekennzeichnet, dass** mittels der Steuereinheit ein Verfahren nach einem der Ansprüche 1 bis 9 durchgeführt wird.

**Claims**

**1.** Method for controlling a compressor (2) which is suitable for conveying a pressure medium in a closed pressure medium system, preferably for conveying a pressure medium in a closed ride level control system of a motor vehicle, in which method the current compressor temperature is continuously determined, at least during compressor operation, and the compressor (2) is switched off no later than when a limit temperature is reached, **characterized in that** the admission pressure and counterpressure of the compressor (2) are taken into consideration for determining the current compressor temperature.

**2.** Method for controlling a compressor (2) according to Claim 1, **characterized in that** during compressor operation, the current compressor temperature is adapted by a temperature value dT after every elapsed unit of time dt, said temperature value dT being dependent on the pressure difference $p_{counter} - p_{admission}$ between the counterpressure and the admission pressure.

**3.** Method for controlling a compressor (2) according to Claim 2, **characterized in that** the functional relationship between the temperature value dT and the pressure difference $p_{counter} - p_{admission}$ between the counterpressure and the admission pressure is stored as a characteristic diagram in a control unit for the compressor (2).

**4.** Method for controlling a compressor (2) according to Claim 2, **characterized in that** a fixed temperature value dT is predefined as a function of the pressure difference $p_{counter} - p_{admission}$ between the counterpressure and the admission pressure present at the beginning of compressor operation.

**5.** Method for controlling a compressor (2) according to Claim 4, **characterized in that** for a pressure difference $p_{counter} - p_{admission}$ between the counterpressure and the admission pressure greater than zero, the temperature value dT is predefined as being the value associated with the maximum possible pressure difference $p_{counter} - p_{admission}$ between the counterpressure and the admission pressure.

**6.** Method for controlling a compressor (2) according to Claim 4, **characterized in that** for a pressure difference $p_{counter} - p_{admission}$ between the counterpressure and the admission pressure less than or equal to zero, the temperature value dT is predefined as being the value associated with the difference $p_{counter} - p_{admission} = $ zero.

**7.** Method for controlling a compressor (2) according to one of Claims 1 to 6, **characterized in that** a maximum operating time for the compressor (2) is predefined at the beginning of compressor operation.

**8.** Method for controlling a compressor (2) according to one of Claims 2 to 7, **characterized in that** the traveling speed of the motor vehicle is additionally taken into consideration when predefining a temperature value dT.

**9.** Method for controlling a compressor (2) according to one of Claims 2 to 8, **characterized in that** the electrical compressor voltage is additionally taken into consideration when predefining a temperature value dT.

**10.** Compressor (2), which can be switched on and off as a function of demand, for a closed pressure medium system, preferably a closed ride level control system of a motor vehicle, a control unit being associated with said compressor (2), said control unit continuously determining the current compressor temperature, at least during compressor operation, and switching off the compressor (2) no later than when a stored limit temperature is reached, **characterized in that** a method according to one of Claims 1 to 9 is carried out by means of the control unit.

**Revendications**

**1.** Procédé de commande d'un compresseur (2) qui convient pour refouler un fluide sous pression dans une installation fermée à fluide sous pression, de préférence pour refouler un fluide sous pression dans une installation fermée de régulation du niveau d'un véhicule automobile, et dans lequel au moins pendant que le compresseur tourne, la température du compresseur est déterminée en permanence et le compresseur (2) est débranché au plus tard lorsqu'une température limite est atteinte, **caractérisé en ce que** pour déterminer la température du compresseur en permanence, on tient compte de la pression en amont et de la pression en aval du compresseur (2).

**2.** Procédé de commande d'un compresseur (2) selon la revendication 1, **caractérisé en ce que** pendant que le compresseur tourne, après chaque intervalle de temps dT, la température instantanée du compresseur est adaptée avec une valeur de température dT qui dépend de la différence de pression $p_{aval}$ - $p_{amont}$ entre la pression en aval et la pression en amont du compresseur.

**3.** Procédé de commande d'un compresseur (2) selon la revendication 2, **caractérisé en ce que** la relation fonctionnelle entre la valeur de température dT et la différence de pression $p_{aval}$ - $p_{amont}$ entre la pression en aval et la pression en amont du compresseur est conservée sous la forme d'un champ de caractéristiques dans une unité de commande prévue pour le compresseur (2) .

**4.** Procédé de commande d'un compresseur (2) selon la revendication 2, **caractérisé en ce qu'**au début du fonctionnement du compresseur, une valeur de température dT est prédéterminée en fonction de la différence de pression $p_{aval}$ - $p_{amont}$ qui règne entre l'aval et l'amont du compresseur.

**5.** Procédé de commande d'un compresseur (2) selon la revendication 4, **caractérisé en ce qu'**au cas où la différence de pression $p_{aval}$ - $p_{amont}$ entre la pression en aval et la pression en amont du compresseur est supérieure à zéro, on fixe comme valeur de température dT celle qui est associée à la plus grande différence de pression $p_{aval}$ - $p_{amont}$ possible entre la pression en aval et la pression en amont du compresseur.

**6.** Procédé de commande d'un compresseur (2) selon la revendication 4, **caractérisé en ce que** qu'au cas où la différence de pression $p_{aval}$ - $p_{amont}$ entre la pression en aval et la pression en amont du compresseur est supérieure à zéro, on fixe comme valeur de température dT celle qui est associée à la différence $p_{aval}$ - $p_{amont}$ = zéro.

**7.** Procédé de commande d'un compresseur (2) selon l'une des revendications 1 à 6, **caractérisé en ce qu'**au début du fonctionnement du compresseur, on prédétermine une durée maximale de fonctionnement du compresseur (2) .

**8.** Procédé de commande d'un compresseur (2) selon l'une des revendications 2 à 7, **caractérisé en ce que** lorsqu'une valeur de température dT est prédéterminée, on tient de plus compte de la vitesse de conduite du véhicule automobile.

**9.** Procédé de commande d'un compresseur (2) selon l'une des revendications 2 à 8, **caractérisé en ce que** lorsqu'une valeur de température dT est prédéterminée, on tient de plus compte de la tension électrique du compresseur.

**10.** Compresseur (2) apte à être branché et débranché en fonction des besoins dans une installation fermée à fluide sous pression, de préférence l'installation fermée de régulation du niveau d'un véhicule automobile, et à laquelle est associée une unité de commande qui, au moins pendant que le processeur fonctionne, détermine en permanence la température instantanée du compresseur et débranche le compresseur (2) au plus tard lorsqu'une température limite conservée en mémoire est atteinte, **caractérisé en ce qu'**un procédé selon l'une des revendications 1 à 9 est exécuté au moyen de l'unité de commande.

FIG. 1

## FIG. 2

## FIG. 3

## FIG. 4

$(P_{gegen} - P_{vor} > 0)$

## FIG. 5

$(P_{gegen} - P_{vor} \leq 0)$